# EUROPEAN PATENT APPLICATION

(11) **EP 4 451 355 A1**
(43) Date of publication of application: **23.10.2024**
(21) Application number: 23168785.6
(22) Date of filing: 19.04.2023
(51) Int. Cl.: H01M 4/04, H01M 4/136, H01M 4/1397, H01M 4/38, H01M 10/054, H01M 10/058, H01M 4/02

(54) **A METHOD FOR MANUFACTURING A SODIUM OR POTASSIUM ION BATTERY CELL**

(71) Applicant: Altris AB, 753 18 Uppsala (SE)
(72) Inventor: MOGENSEN, Ronnie, Uppsala (SE); MALINOVSKIS, Paulius, Uppsala (SE); HEDMAN, Jonas, Uppsala (SE)
(74) Representative: Kransell & Wennborg KB

(57) **Abstract**

The present disclosure generally relates to a method for manufacturing a sodium or potassium ion battery cell comprising a Prussian Blue analogue (PBA) as an active cathode material. The present disclosure also relates to a sodium or potassium ion battery produced by the method.

## Description

### TECHNICAL FIELD

The present disclosure generally relates to a method for manufacturing a sodium or potassium ion battery cell comprising a Prussian Blue analogue (PBA) as an active cathode material. The present disclosure also relates to sodium or potassium ion battery cell produced by the method.

### BACKGROUND

Lithium ion based batteries dominate the market for rechargeable batteries. However, the technology has drawbacks, not at least due to the relatively scarce resources of lithium. Although better than previous generations of secondary battery technologies, the lithium ion based batteries are not considered to be environmentally friendly, and are also costly from a recycling perspective.

These drawbacks have triggered the exploration of alternatives to lithium ion batteries. Sodium or potassium ion batteries represent attractive alternatives, and also represent viable means of supporting renewable energy sources for the purpose of load leveling and storing excess energy.

The performance of sodium or potassium ion batteries is greatly dependent on the properties of the electrode materials.

A typical process to manufacture an electrode, e.g. a cathode is to mix an active material with a solvent, conductive additives and binders to form a slurry. The slurry is then coated on a current collector to form a cathode. The cathode may then be assembled with an anode, and any other components used to form a battery, such as a separator.

In conventional battery production, all steps of the process must typically be performed in a dry room. A dry room is a room wherein the moisture content of the air is controlled to a certain level. If the battery or any components thereof is exposed to moisture during assembly, this may lead to an impaired quality, e.g. a reduced charging capacity and an overall reduced performance.

Prussian blue analogue (PBA) cathode materials stand out as promising cathode materials for use in sodium or potassium ion batteries. Prussian blue analogues have a unique crystal structure with open three-dimensional frameworks and large interstitial voids, and are capable of storing sodium (and potassium) ions.

When PBA is used as the active cathode material, drying is particularly important, since any water present in the PBA structure must be removed for the material to fully utilize its capacity in a battery cell. The presence of water may negatively affect the electrochemical potential and cycling stability in a battery cell comprising PBA as a cathode material.

It is therefore essential to remove any water present in the PBA material when used in the final battery cell. However, once the water has been removed from the PBA material, the PBA material still has a strong affinity for water. PBA is extremely hygroscopic and may quickly shift from being anhydrous to becoming hydrous as soon as it is exposed to air or moisture.

The manufacturing of a battery cell comprising a PBA-containing cathode is therefore a cumbersome and difficult task.

While a dry room may be utilized in conventional battery production, a dry room as used for e.g. Lithium ion battery manufacturing is not always sufficient to secure that the PBA material is maintained in its anhydrous form, and there is consequently an enhanced risk of cathode decomposition.

Furthermore, a dry room is generally not a convenient environment for personnel to work in.

Accordingly, there is a need to provide an improved method for the manufacturing of a sodium or potassium ion battery, which method is simple, inexpensive, and more convenient from a work environment point of view. Furthermore, the method should be suitable for large-scale sodium or potassium ion battery production.

### SUMMARY

In view of above-mentioned and other drawbacks of the prior art, it is an object of the present disclosure to provide improvements in relation to sodium or potassium ion batteries, particularly with respect to providing a simplified and inexpensive manufacturing method to produce such batteries in large industrial scale.

According to a first aspect of the present disclosure, there is provided a method for manufacturing a sodium or potassium ion battery comprising:
a) providing a slurry comprising a Prussian Blue analogue, wherein the Prussian Blue analogue can exist in a first, hydrated phase, and a second, dehydrated phase, wherein the slurry comprises the first, hydrated phase of the Prussian Blue analogue,
b) applying the slurry to a current collector to form a cathode,
c) assembling the cathode with an anode and a separator to form an electrode stack,
d) drying the electrode stack under conditions that allow for the Prussian Blue analogue to convert from the first, hydrated phase to the second, dehydrated phase,
e) arranging the electrode stack in a battery casing,
f) adding an electrolyte to the battery casing, and
g) sealing the battery casing to form a battery cell, wherein steps e)-g) are performed in an atmosphere having a dew point temperature in the range of from -40°C to -80°C, and wherein the process time to perform the steps e)-g) is less than 7 hours, preferably less than 5 hours.

The Prussian blue analogue (PBA) may exist in a hydrated; i.e. hydrous phase, and in a dehydrated; i.e. anhydrous phase, in which the water has been removed. The present inventors have found that the method of manufacturing a sodium or potassium ion battery cell can be greatly improved if the steps e)-g) of the method are performed in an atmosphere having a dew point temperature in the above-mentioned range.

This allows for the Prussian Blue analogue to be maintained in the second, dehydrated phase throughout the steps e)-g) of the method. Accordingly, undesired conversions between the dehydrated and hydrated phases are prevented.

In the first, hydrated phase of the Prussian Blue analogue, the material has a monoclinic crystal structure. The PBA material will generally be present in its monoclinic structure in the slurry, and in the steps preceding the drying step.

In the second, dehydrated phase, the PBA material has a rhombohedral crystal structure. For battery applications, the dehydrated, rhombohedral phase of PBA is desirably utilized to maximize the energy density and the cycling stability of the battery cell.

In the transition from the first to the second phase, the crystal lattice of the monoclinic structure is distorted, and there is a significant change in volume. The phase transition is associated with a substantial increased sensitivity to moisture. The dehydrated, rhombohedral structure of the Prussian Blue analogue is extremely susceptible to reverting back to the first, hydrated phase, i.e. to the monoclinic structure. This is, however, not desired since such reversion may result in significantly impairing the PBA structure, rendering the material unsuitable for use in a battery cell. Furthermore, considerable amounts of sodium or potassium may be lost during such reversion.

It is therefore important that the PBA material, after it has been shifted to the second, dehydrated phase, remains in this phase; i.e. maintains its rhombohedral crystal structure, throughout the remaining steps of the method. This is achieved by means of the method of the present disclosure.

An atmosphere having a dew point temperature in the range of from -40°C to - 80°C contains substantially no moist or water molecules that can react with the PBA material.

The process time for steps e)-g) is also a factor that may affect the ability of the PBA material to be maintained in the second, dehydrated phase. The process time may thus also affect the risk of decomposition of the cathode during manufacturing.

If the dew point temperature is in the higher range (e.g. from -40°C to -50°C), then the time to perform steps e)-g) typically must be shorter. A longer process time between the drying step and the final step of sealing may negatively impair the final battery cell (due to undesired PBA conversions and decomposition of the cathode).

If the dew point temperature is in the lower range (e.g. from -70°C to -80°C), then the process time is not equally sensitive, and a longer process time is conceivable.

However, the process time is less than 7 hours, preferably less than 5 hours. The process time may e.g. be from 10 minutes to less than 5 hours.

This is also advantageous from a work environment aspect. As mentioned hereinbefore, the exposure to an atmosphere having a dew point temperature in the above-mentioned ranges is preferably as short as possible. An atmosphere with a dew point in the ranges mentioned hereinabove is extremely dry and contains essentially no water molecules.

A further advantage of the present method is that there are no specific process requirements for the steps of the method preceding the drying step.

For example, the steps a)-c) of the method may be performed in ambient conditions.

This is beneficial from a work environment point of view. The time period that the personnel need to be exposed to a low dew point atmosphere is thereby significantly reduced.

With the method of the present disclosure, significant improvements in capacity and cycling performance have been observed. A simple and cost-efficient method, suitable for large-scale battery production is thus provided.

In exemplary embodiments, the steps e)-g) are performed in an atmosphere having a dew point temperature in the range of from -45°C to -70°C, preferably from -50°C to -70°C.

The process time to perform steps e)-g) of the method is less than 7 hours, preferably less than 5 hours.

Preferably, the process time to perform steps e)-g) may be from 5 minutes to less than 3 hours, preferably from 15 minutes to 2.5 hours.

This time period is suitable to avoid undesired conversions of the PBA structure and to prevent the cathode from degrading. It also poses less demands on the personnel during manufacture of the battery cell.

As mentioned hereinbefore, the steps a)-c) of the method may be performed in ambient conditions.

Hence, the personnel can work and operate under normal (and less "extreme") conditions during these steps of the method.

The slurry comprising the Prussian Blue analogue is typically an aqueous slurry. Accordingly, the Prussian Blue analogue may be kept in the first, hydrated phase in the slurry.

The Prussian Blue analogue is preferably present in the first hydrated phase in steps a)-c) of the method.

The inventors have found that it is desired to keep the Prussian Blue analogue in the first hydrated phase until the step of drying (step d); i.e. where the phase transition occurs. This way, undesired transitions between the first and second phases are avoided, and only one phase transition (during the drying step) is performed.

This allows for the steps preceding the drying step to be performed in ambient conditions. This is a considerable advantage compared to conventional battery manufacturing techniques, which typically require all method steps to be carried out in a dry room.

Accordingly, the steps of providing a PBA slurry (step a), applying the slurry to a current collector (step b), assembling the cathode with additional battery components (step c) may be performed in ambient conditions. At these stages of the process, the PBA material is less susceptible since it has not been converted to the second, dehydrated phase yet.

In exemplary embodiments, the step d) of drying is performed at a drying temperature, t1, of from 110 to 300°C.

For example, step d) of drying may be performed at a drying temperature, t1, of from 150 to 300°C, preferably from 160 to 250°C.

The drying time may be from 15 minutes to 20 hours.

These drying conditions are suitable for enabling a phase transition of the first, hydrated phase of Prussian blue analogue to the second, dehydrated phase of the PBA. Furthermore, these drying conditions allow for the removal of any water present in the first phase of the PBA material, as well as potentially present in any other part of the battery cell. Also, these drying conditions do not adversely affect the PBA structure or any other component of the battery cell.

The drying time may be significantly reduced if the drying temperature, t1, is in the range of from 150 to 300°C. A drying time of less than four hours may then be sufficient for efficient conversion from the first, hydrated PBA phase, to the second, dehydrated PBA phase.

In exemplary embodiments, the step d) of drying is performed at a pressure below ambient pressure.

Vacuum is desirably utilized since it enables the drying time to be reduced.

In exemplary embodiments, the separator has a melting temperature, t2, that is higher than the drying temperature, t1.

The separator prevents electrical short circuit between the negative and the positive electrodes and provides mechanical stability to the battery cell. The separator material may comprise any material which is chemically stable and electrically insulating. The separator is preferably heat-stable at a temperature of from 170°C to 320°C, e.g. from 200°C to 270°C.

In exemplary embodiments, the Prussian Blue analogue has the formula AₐM_{b}[M'_{c}(CN)₆]_{d}, wherein A is sodium or potassium, and 1 < a ≤ 2, wherein M and M' are transition metals, preferably selected from iron and/or manganese, wherein 0 < b < 2, 1 < c < 2, and wherein 1 < d < 2.

Preferably, the Prussian Blue analogue is Prussian white having the formula AₐFe[Fe(CN)₆], wherein A is sodium or potassium, and wherein 1.8 < a ≤ 2, preferably wherein 1.9 < a ≤ 2.

Prussian white is associated with a high battery capacity and an enhanced capability in storing sodium (and potassium) ions. Prussian white is also environmentally friendly and can be produced at a low cost.

In exemplary embodiments, the step of applying the slurry to a current collector comprises coating the current collector with the slurry at a coating weight of from 5 mg/cm² to 70 mg/cm², preferably of from 10 mg/cm² to 40 mg/cm².

The thickness of the coating on the current collector may vary depending on the specific application and purpose. For example, the thickness of the PBA coating may be in the range of from 50 µm to 500 µm, e.g. from 100 µm to 250 µm.

The electrode may then be cut into the desired shape by techniques well known in the field.

The cathode may be assembled with an anode by stacking or winding the electrodes with a separator.

According to another aspect, there is provided a sodium or potassium ion battery cell produced according to the method as described hereinbefore.

In exemplary embodiments, the battery cell has an electrochemical cycling curve being absent of a voltage plateau above 3.7 V vs. Na⁺/Na or vs. K⁺/K.

The absence of a voltage plateau above 3.7 V is an indication that water has been removed from the battery cell and that the PBA material is present in the second, dehydrated phase. Such a battery cell is associated with a stable behavior during subsequent charges and discharges and has a high initial coulombic efficiency. A voltage plateau above 3.7 V (vs. Na+/Na or vs. K+/K) is associated with water extraction and is an indication that the PBA material comprises the first, hydrated phase of the PBA material.

In exemplary embodiments, the battery cell has an electrochemical cycling curve displaying one voltage plateau between 3.2 and 3.7 V vs Na+/Na or vs. K+/K, and wherein the electrochemical cycling curve is void of any additional voltage plateau(s).

The presence of one distinct voltage plateau in the above-mentioned range indicates that the battery cell is void of water and that no side reactions caused by water or moisture occurs.

In exemplary embodiments, the energy efficiency of the battery cell is at least 80% over the first 25 cycles.

Accordingly, the battery cell has a stable battery cycling performance.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF THE DRAWINGS

The various aspects of the present disclosure, including its particular features and advantages, will be readily understood from the following detailed description and the accompanying drawings, in which:
Figure 1 schematically illustrates the steps of the method of the present disclosure.
Figure 2 schematically illustrates a sodium or potassium ion battery according to an exemplary embodiment of the present disclosure.
Figure 3a illustrates the cycling data for a sodium ion battery cell produced according to an exemplary embodiment of the method of the present disclosure at a dew point temperature of -48°C and a process time to perform steps e)-g) of 3 hours.
Figure 3b illustrates the cycling data for a sodium ion battery cell produced according to an exemplary embodiment of the method of the present disclosure produced under the same conditions as the battery cell of figure 3a, but differing in that the process time to perform steps e)-g) was 30 minutes.
Figure 3c illustrates the energy efficiency over cycle numbers for a sodium ion battery cell produced according to an exemplary embodiment of the method of the present disclosure at a dew point temperature of -48°C and a process time to perform steps e)-g) of 3 hours.
Figure 3d illustrates the energy efficiency over cycle numbers for a sodium ion battery cell produced according to an exemplary embodiment of the method of the present disclosure produced under the same conditions as the battery cell of figure 3a, but differing in that the process time to perform steps e)-g) was 30 minutes.

### DETAILED DESCRIPTION

The present disclosure will now be described more fully hereinafter with reference to the accompanying drawings, in which currently preferred embodiments of the present disclosure are shown. The present disclosure may, however, be embodied in many different forms and should not be construed as limited to the embodiments set forth herein; rather, these embodiments are provided for thoroughness and completeness, and fully convey the scope of the present disclosure to the skilled person.

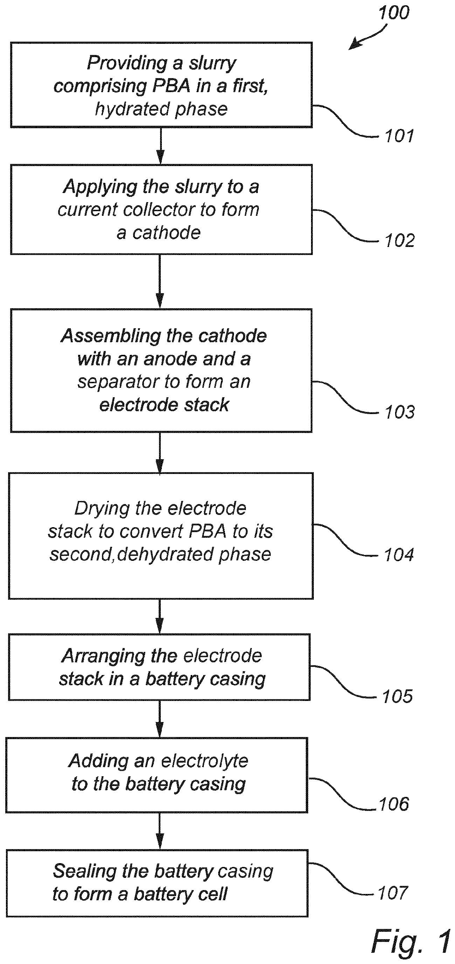

Figure 1a schematically outlines the steps of the method (100) for manufacturing a sodium or potassium ion battery cell of the present disclosure.

The method comprises the following steps in consecutive order:
a) providing a slurry comprising a Prussian Blue analogue, wherein the Prussian Blue analogue can exist in a first, hydrated phase, and a second, dehydrated phase, wherein the slurry comprises the first, hydrated phase of the Prussian Blue analogue (step 101),
b) applying the slurry to a current collector to form a cathode (step 102),
c) assembling the cathode with an anode and a separator to form an electrode stack (step 103),
d) drying the electrode stack under conditions that allow for the Prussian Blue analogue to convert from the first, hydrated phase to the second, dehydrated phase, (step 104),
e) arranging the electrode stack in a battery casing (step 105),
f) adding an electrolyte to the battery casing (step 106), and
g) sealing the battery casing to form a battery cell (step 107), wherein the steps e)-g) are performed in an atmosphere having a dew point temperature in the range of from -40°C to -80°C, and wherein the process time to perform steps e)-g) is less than 7 hours, preferably less than 5 hours.

A key feature of the method of the present disclosure is to perform the steps e)-g) under conditions that prevent reactions and undesired conversions of the PBA material, and which allow Prussian Blue analogue to be maintained in the second, dehydrated phase throughout the steps e)-g) of the method. This is accomplished by performing these steps in an atmosphere having a dew point temperature in the range defined hereinabove and during a time period of less than 7 hours, preferably less than 5 hours.

It is important to secure that the electrode stack is not exposed to moisture or air during the steps following the drying step d). The process of the present disclosure secures that only one phase transition between the first, hydrated phase and the second, dehydrated phase of the PBA analogue occurs. Accordingly, undesired reversions between the first and the second phase of the PBA material, which may result in expansion and damage of the material, are prevented.

As used herein, the term "dew point temperature" means the temperature to which air must be cooled to become saturated with water vapor (assuming air pressure and moisture content are constant). The dew point temperature is a measurement of the water vapor content in a gas. The dew point is used as a measure of the atmospheric moisture.

The atmosphere typically has a relative humidity (RH) below 20%.

The inventors have found that significant improvements in capacity and cycling performance can be obtained with a battery cell produced according to the method of the present disclosure. A battery cell with stable cycling performance is obtained, and undesired side reactions resulting from moist exposure are avoided.

The personnel may still work and operate under normal conditions throughout the first steps of the method, and perform steps e)-g) in the dew point controlled atmosphere (compared to e.g. conventional lithium ion battery manufacturing where all steps are carried out in a dry room).

Preferably, steps e)-g) are performed in an atmosphere having a dew point temperature in the range of from -45°C to -70°C.

The process time to perform steps e)-g) may be from 5 minutes to less than 5 hours.

Preferably, the process time to perform steps e)-g) is from 10 minutes to less than 3 hours, preferably from 15 minutes to 2.5 hours.

If the dew point temperature in the range of from -40°C to -50°C, the process time to perform e)-g) may be from 5 minutes to less than 3 hours, e.g. from 10 minutes to 2.5 hours.

If the dew point temperature in the range of from -50°C to -80°C, the process time to perform e)-g) may be from 5 minutes to less than 5 hours, e.g. from 10 minutes to 4 hours.

Preferably, steps a)-c) of the method are performed in ambient conditions.

As used herein, "ambient conditions" means the prevailing air temperature and relative humidity in which the process is taking place. The steps a)-c) may be performed at a relative humidity (RH) level associated with room temperature (e.g. 40-60% RH). The process is not limited to any specific requirements or equipment in these first steps of the method.

The first steps of the method; i.e. steps a)-c) (steps 101-103) may be performed at room temperature.

The Prussian Blue analogue is preferably present in the first, hydrated phase in steps a)-c) of the method.

Hence, with the method of the present disclosure, only one phase conversion occurs, and the personnel need only to perform the last steps of the method (steps e)-g)) in the low dew point temperature atmosphere.

The step of providing a slurry (step 101) may comprise mixing the Prussian Blue analogue in the form of a powder, with a conductive additive and a binder.

The mixing may be performed by stirring and/or mixing for at least one hour.

The conductive additive may be any type of conductive additive known to the skilled person. For example, various types of carbon compounds, e.g. super P, C65, C45, carbon black, e.g. ketjen black may be utilized.

The binder is not limited to a particular binder. For example, alginate, carboxymethyl cellulose (CMC), styrene-butadiene rubber (SBR), polyvinylidene fluoride (PVdF) may be used.

The Prussian Blue analogue (PBA) powder may be prepared by means known in the art.

The slurry comprising the Prussian Blue analogue is typically an aqueous slurry. Accordingly, the Prussian Blue analogue is present in its first, hydrated phase in the slurry.

The step (102) of applying the slurry to a current collector may comprise coating the current collector with the slurry at a coating weight of from 5 mg/cm² to 70 mg/cm², preferably of from 10 mg/cm² to 40 mg/cm².

The slurry is preferably evenly applied onto at least one side of the current collector. The current collector is typically a metal foil or a metal sheet.

The current collector may be coated on one side or on two sides. When coated on two sides, the coating weight may be increased. For example, the coating weight may then be from 30 to 50 mg/cm².

The step of coating is by no means limited to a particular coating technique, but any means for coating the slurry on the current collector may be utilized. For example, slot-die coating may be utilized. Preferably, the coating is evenly distributed on at least one side of the current collector.

The thickness of the coating on the current collector may vary depending on the specific application and purpose. For example, the thickness of the PBA coating may be in the range of from 50 µm to 500 µm, e.g. from 100 µm to 250 µm.

Subsequently, the coated active PBA material may be pressed and compacted onto the current collector by e.g. calendaring, for instance by means of a roller press calendar. Accordingly, a consistent thickness and density of the coating may be achieved.

The electrode may then be cut into the desired shape by techniques well known in the field. For example, any type of slitting machine may be utilized.

In step 103, the cathode is assembled with an anode by stacking or winding the electrodes with a separator. Any technique known in the field may be utilized.

As mentioned hereinbefore, the separator prevents electrical short circuit between the negative and the positive electrodes and provides mechanical stability to the battery cell. The separator material may comprise any material which is chemically stable and electrically insulating.

The separator has a melting temperature, t2, that is higher than the drying temperature, t1.

The separator is preferably heat-stable at a temperature of from 170°C to 320°C, e.g. from 200°C to 270°C.

The separator may comprise any material which is chemically stable and electrically insulating, e.g. polymer films, such as films comprising polypropylene, polyethylene or combinations of these

In step 104, the electrode stack is dried. The drying temperature, t1, may be from 110 to 300°C.

The drying time may vary depending on the temperature used during drying.

In exemplary embodiments, the step d) of drying the electrode stack may be performed at a drying temperature, t1, of from 150°C to 300°C, e.g. from 170°C to 250°C.

The drying time may be from 15 minutes to 20 hours.

The drying time may be significantly reduced if the drying temperature, t1, is in the range of from 150 to 300°C, e.g. from 170 to 250°C. A drying time of less than four hours may be sufficient for efficient conversion from the first, hydrated PBA phase, to the second, dehydrated PBA phase.

Preferably, the drying step is performed at a pressure below ambient temperature.

Preferably, the drying step is performed under vacuum. This is beneficial to reduce the drying time needed for phase transition of the PBA analogue.

The step of drying may be performed at a pressure of from 10⁻³ to 100 mbar. For example, the pressure may be from 0.01 to 1 mbar.

However, the pressure is greatly dependent on the temperature utilized in the drying step. Accordingly, the pressure may vary depending on the temperature used during drying.

It is important that the drying step secures the removal of any water present in the active PBA material, as well as potentially present in any other part of the battery cell.

A dehydrated PBA material means that the PBA material comprises no water affecting the electrochemical behavior of a battery cell comprising the PBA material.

The step of drying (step d)) may be performed in a drying device, such as a closed drying chamber.

The step d) of drying may also be performed in an atmosphere having a dew point temperature in the range of from -40°C to -80°C.

The drying chamber may be arranged in the room in which steps e)-g) are performed. This is to prevent the battery cell components from exposure to moist or ambient atmosphere.

The step d) of drying may be performed under inert conditions.

As used herein, the term "inert conditions" means an atmosphere absent of oxygen and water.

After the step of drying (step 104), the battery cell is arranged into a battery casing (step 105).

The battery casing may vary depending on the intended use and preference. The battery casing surrounds and seals the battery cell and acts as a barrier against any air or moisture permeation into and out from the battery cell.

The battery casing may be a pouch cell or a cylindrical cell.

Typically, the battery casing is a pouch cell. The pouch cell may be formed of a flexible material, such as a foil. Accordingly, the battery casing is flexible and light and may be made in various sizes and shapes.

For example, the pouch cell may comprise a polymer coated metal foil. The metal foil may comprise a polymer coating on one side or on both sides of the metal foil.

When the electrode stack is inserted into the pouch cell, the pouch cell may be partially sealed.

The method further comprises the step of adding an electrolyte to the battery casing (step 106).

In exemplary embodiments, step f) (step 106) may be performed under inert conditions. Accordingly, step f) is performed in an atmosphere absent of oxygen and water.

For example, step f) (step 106) may be performed in an electrolyte injection device, such as a glove box. The glove box is a closed device, which may comprise sealed-in gloves, for electrolyte injection. The glove box may be filled with an inert gas, e.g. Argon (Ar) gas.

Since the electrolyte may contain organic solvents, potentially harmful for the personnel dealing with the electrolyte injection, it may be beneficial to perform step f) of adding an electrolyte to the battery casing (step 106) in an inert and enclosed atmosphere, such as a glove box.

The method of the present disclosure is not limited to the use of a specific electrolyte.

Preferably, the electrolyte is a non-aqueous electrolyte. A non-aqueous electrolyte prevents water from interfering with the PBA coated cathode. Furthermore, a non-aqueous electrolyte offers a larger voltage window compared to aqueous electrolytes. Also, since the battery cell has been dried and the PBA is dehydrated, there is substantially no water present in the active PBA material or in the battery cell that can interfere with the non-aqueous electrolyte.

The non-aqueous electrolyte solution typically comprises a solvent or blends of solvents and at least one dissolved salt.

For example, the non-aqueous electrolyte may e.g. comprise ethylene carbonate, diethyl carbonate, dimethyl carbonate and/or any mixtures thereof. The non-aqueous electrolyte may comprise a salt, such as sodium hexafluorophoshate (NaPF₆) or sodium tetrafluoroborate (NaBF₄). The non-aqueous electrolyte may also comprise additives.

In exemplary embodiments, the non-aqueous electrolyte comprises an alkalimetal bis(oxalato)borate salt, wherein the alkali metal ion is selected from sodium (Na⁺) and potassium (K⁺). Such a non-aqueous electrolyte solution is fluorine-free, environmentally friendly, safe and has a high ionic conductivity and electrochemical stability.

The battery casing is thereafter sealed (step 107).

In exemplary embodiments, the Prussian Blue analogue has the formula AₐM_{b}[M'_{c}(CN)₆]_{d}, wherein A is sodium or potassium, and 1 < a ≤ 2, wherein M and M' are transition metals, preferably selected from iron and/or manganese, wherein 0 < b < 2, 1 < c < 2, and wherein 1 < d < 2.

In embodiments, the Prussian Blue analogue is Prussian white having the formula AₐFe[Fe(CN)₆], wherein A is sodium or potassium, and wherein 1.8 < a ≤ 2, preferably wherein 1.9 < a ≤ 2.

Prussian white is associated with a high battery capacity and an enhanced capability in storing sodium (and potassium) ions. Prussian white is also environmentally friendly and can be produced at a low cost.

In embodiments, where the Prussian Blue analogue is a Prussian white material, this material may be prepared according to the method described in WO2018/056890, assigned to Altris AB.

According to another aspect, there is provided a sodium or potassium ion battery cell produced according to the method described hereinbefore.

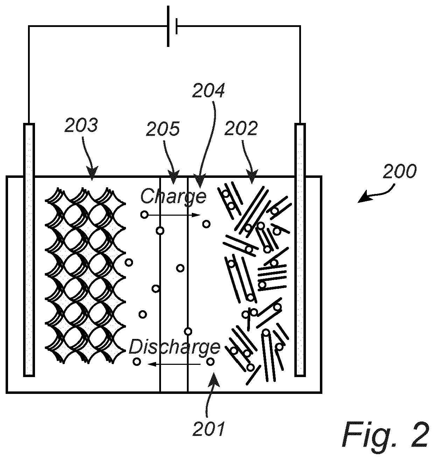

Figure 2 illustrates the schematic principles of a sodium or potassium ion battery 200 utilizing sodium or potassium ions 201 as charge carriers. The battery stores energy in chemical bonds of the negative electrode, i.e. the anode 202. Charging the battery 200 forces Na⁺ or K⁺ ions 201 to de-intercalate from the positive electrode; i.e. the cathode 203 and migrate towards the anode 202. During discharge, the process reverses. Once a circuit is completed, electrons pass back from the anode 202 to the cathode 203 and the Na⁺ or K⁺ ions 201 travel back to the cathode 203. During discharge of the battery, as illustrated in figure 2, oxidation takes place at the anode 202, while reduction takes place at the cathode 203. The current flow is determined by the potential difference between the cathode 203 and the anode 202, the cell voltage.

The two electrodes are separated by a separator 205 infiltrated with an electrolyte 204.

As used herein the term "battery" means a device comprising one or more battery cells.

A "battery cell" comprises a positive electrode; i.e. a cathode, a negative electrode; i.e. an anode, and a separator. In the battery cell, chemical energy is transformed into electricity by reduction and oxidation (redox) reactions at the electrodes.

The cathode 203 utilized in a sodium or potassium ion battery of the present disclosure comprises a current collector coated with the Prussian blue analogue material as described hereinbefore.

The negative electrode material, i.e. the anode 202, is not particularly limited as long as it is a material capable of storing/releasing sodium or potassium ions. Examples include metal composite oxides, sodium metal, sodium alloys, silicon, silicon-based alloys, tin-based alloys, bismuth-based alloys, metal oxides, conductive polymers, Na-Co-Ni-based materials, hard carbon and the like. The anode may be a metal foil coated with an active anode material.

Preferably, the battery cell has an electrochemical cycling curve being absent of a voltage plateau above 3.7 V for Na+/Na or K+/K. Such a voltage plateau is associated with water extraction and is an indication that the PBA has not been fully transitioned from the first, hydrated phase to the second, dehydrated phase.

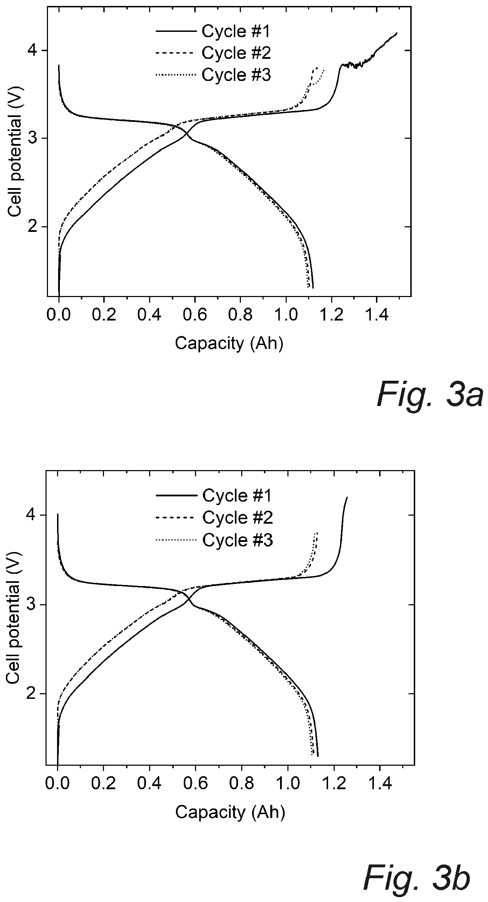

As used herein, the term "absent of a voltage plateau above 3.7 V vs. Na⁺/Na or vs. K⁺/K" means that there is no additional capacity after 3.7 V. Accordingly, there is no reaction caused by moisture above 3.7 V vs. Na⁺/Na or vs. K⁺/K. This is illustrated by the electrochemical cycling curve going vertically upwards in figure 3b. The anode used in electrochemical cycling tests is typically a carbon-based anode (hard carbon).

The presence of water or side reactions caused by water or moisture may be evidenced by a sloping curve above 3.7 V vs. Na⁺/Na or vs. K⁺/K. It may also be evidenced by the presence of more than one voltage plateau in the electrochemical cycling curve (see figure 3a).

The battery cell may have an electrochemical cycling curve displaying one voltage plateau between 3.2 and 3.7 V vs. Na⁺/Na or vs. K⁺/K, and wherein the electrochemical cycling curve is void of any additional voltage plateau(s).

Accordingly, a stable and high performing battery cell being absent of water is achieved.

Preferably, the energy efficiency of the battery cell is at least 80% over the first 25 cycles.

As used herein "energy efficiency" means the amount of energy taken from the battery relative to the energy charging the battery means. The energy efficiency is the ratio between the sodiation capacity multiplied with the average voltage of that sodiation cycle and the desodiation capacity multiplied with the average voltage of that desodiation cycle. The higher the energy efficiency over cycle number, the more stable the system.

An battery cell having an energy efficiency of a least 80% over the first 25 cycles has a stable cycling performance.

### Examples:

### Example 1

The Prussian white electrodes were dried at 170°C for 12 hours under high vacuum (<2^{∗} 10-2 mBar) in an oven to remove all water from the electrodes. After drying the electrodes were directly introduced into an Argon filled glovebox (1m³ glovebox). The foils were then sealed into a zip-lock bag. In order to control the moisture and hence the dew point of the glovebox, water was soaked up by tissue papers and attached close to the circulation of the glovebox. The glovebox moisture content was controlled such that the dew point temperature in the glovebox was kept at -48°C. Once the moisture content and the dew point temperature in the glovebox were stable, the electrodes were removed from the zip-lock bag and exposed to moisture in the glovebox for 3h. After that, the electrodes were transferred to another Argon filled glovebox (O₂ < 1ppm, H₂O < 1pm) and then stacked to prototype Prussian white half cells with a separator and an electrode massloading of 12 mg/cm². The cell stack was then moved to a pouch cell casing for electrolyte injection and sealing, while being under inert atmosphere. After that the cell stack was injected with electrolyte and sealed without exposure to ambient atmosphere.

The cycling data in figure 3a shows that the electrode stack contains both the anhydrous phase of Prussian white and the hydrated phase of Prussian white i.e., both the rhombohedral and monoclinic structures. This is clearly evidenced by the voltage plateau above 3.7 V that appears at the end of charge and is associated with water extraction from the cathode. The water content in the cells caused gas evolution in the cells and no discharge was possible.

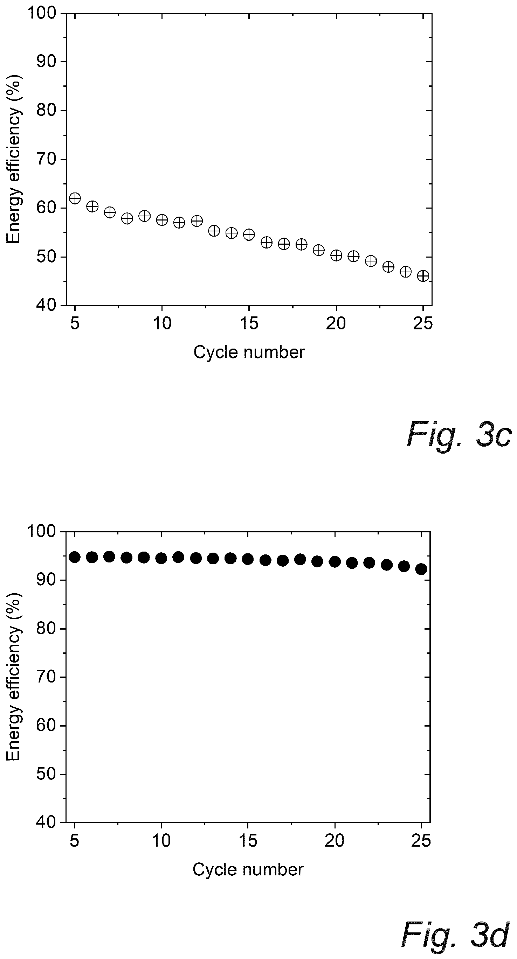

Furthermore, the energy efficiency over cycle numbers was evaluated for the battery cell (see figure 3c). The energy efficiency refers to the amount of energy taken from the battery relative to the energy charging the battery. Compared to the Coulombic efficiency, which describes the current efficiency, the energy efficiency can give indication on the charge and discharge C-rate, hence power. The energy efficiency is the ratio of sodiation capacity multiplied with average voltage of that sodiation cycle to the desodiation capacity multiplied with the average voltage of that desodiation cycle. The energy efficiency may be calculated from the cycling data. The higher the energy efficiency over cycle number, the more stable the system. In figure 3c, the energy efficiency is around 60%.

### Example 2

A similar electrochemical cycling evaluation was performed as described in Example 1. However, this test differed from Example 1 in that the process time to perform steps e)-g) was shorter; i.e. 30 minutes.

The cycling data in figure 3b shows that the electrode stack contains only the anhydrous phase of Prussian white i.e., the rhombohedral phase. This is clearly evidenced by the absence of a voltage plateau above 3.7 Volt appearing at the end of charge (such a voltage plateau is associated with water extraction from the cathode).

Furthermore, the energy efficiency over cycle numbers was evaluated for the battery cell (see figure 3d). The energy efficiency is about 95%, which corresponds to stable battery cycling.

Terms, definitions and embodiments of all aspects of the present disclosure apply mutatis mutandis to the other aspects of the present disclosure.

Even though the present disclosure has been described with reference to specific exemplifying embodiments thereof, many different alterations, modifications and the like will become apparent for those skilled in the art.

Variations to the disclosed embodiments can be understood and effected by the skilled addressee in practicing the present disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A method for manufacturing a sodium or potassium ion battery cell comprising
a) providing a slurry comprising a Prussian Blue analogue, wherein said Prussian Blue analogue can exist in a first, hydrated phase, and a second, dehydrated phase, wherein said slurry comprises said first, hydrated phase of the Prussian Blue analogue,
b) applying said slurry to a current collector to form a cathode,
c) assembling said cathode with an anode and a separator to form an electrode stack,
d) drying said electrode stack under conditions that allow for said Prussian Blue analogue to convert from said first, hydrated phase to said second, dehydrated phase,
e) arranging said electrode stack in a battery casing,
f) adding an electrolyte to said battery casing, and
g) sealing said battery casing to form a battery cell, wherein
said steps e)-g) are performed in an atmosphere having a dew point temperature in the range of from -40°C to -80°C, and wherein the process time to perform said steps e)-g) is less than 7 hours, preferably less than 5 hours.

2. The method according to claim 1, wherein said steps e)-g) are performed in an atmosphere having a dew point temperature in the range of from -45°C to -70°C.

3. The method according to any one of the preceding claims, wherein the process time to perform said steps e)-g) is from 10 minutes to less than 3 hours, preferably from 15 minutes to 2.5 hours.

4. The method according to any one of the preceding claims, wherein said steps a)-c) of said method are performed in ambient conditions.

5. The method according to any one of the preceding claims, wherein said Prussian Blue analogue is present in said first hydrated phase in steps a)-c) of the method.

6. The method according to any one of the preceding claims, wherein said step d) of drying is performed at a drying temperature, t1, of from 110 to 300°C.

7. The method according to any one of the preceding claims, wherein said step d) of drying is performed at a pressure below ambient pressure.

8. The process according to any one of the preceding claims, wherein said separator has a melting temperature, t2, that is higher than said drying temperature, t1.

9. The method according to any one of the preceding claims, wherein said Prussian Blue analogue has the formula AₐM_{b}[M'_{c}(CN)₆]_{d}, wherein A is sodium or potassium, and 1 < a ≤ 2, wherein M and M' are transition metals, preferably selected from iron and/or manganese, wherein 0 < b < 2, 1 < c < 2, and wherein 1 < d < 2.

10. The method according to any one of the preceding claims, wherein said Prussian Blue analogue is Prussian white having the formula AₐFe[Fe(CN)₆], wherein A is sodium or potassium, and wherein 1.8 < a ≤ 2, preferably wherein 1.9 < a ≤ 2.

11. The method of any one of the preceding claims, wherein said step of applying said slurry to a current collector comprises coating said current collector with said slurry at a coating weight of from 5 mg/cm² to 70 mg/cm², preferably of from 10 mg/cm² to 40 mg/cm².

12. A sodium or potassium ion battery cell produced according to the method of any one of claims 1-11.

13. The sodium or potassium ion battery cell according to claim 12, wherein said battery cell has an electrochemical cycling curve being absent of a voltage plateau above 3.7 V vs. Na⁺/Na or vs. K⁺/K.

14. The sodium or potassium ion battery cell according to claim 12 or claim 13, wherein said battery cell has an electrochemical cycling curve displaying one voltage plateau between 3.2 and 3.7 V vs Na+/Na or vs. K+/K, and wherein said electrochemical cycling curve is void of any additional voltage plateau(s).

15. The sodium or potassium ion battery cell according to any one of claims 12-14, wherein the energy efficiency of the battery cell is at least 80% over the first 25 cycles.
